# EUROPEAN PATENT SPECIFICATION

(11) **EP 3 372 482 B1**
(45) Date of publication and mention of the grant of the patent: **31.07.2019**
(21) Application number: 17176229.7
(22) Date of filing: 15.06.2017
(51) Int. Cl.: B62M 6/45, B62K 3/04, B62K 19/40, B62H 5/20, B62M 6/90

(54) **FRAME FOR ELECTRICALLY-ASSISTED VEHICLE AND ELECTRICALLY-ASSISTED VEHICLE**
RAHMEN FÜR ELEKTRISCH UNTERSTÜTZTES FAHRZEUG SOWIE ELEKTRISCH UNTERSTÜTZTES FAHRZEUG
CHÂSSIS POUR À ASSISTANCE ÉLECTRIQUE ET VÉHICULE À ASSISTANCE ÉLECTRIQUE

(30) Priority: 07.03.2017 CN 201720214369 U; 18.05.2017 CN 201720557053 U
(43) Date of publication of application: 12.09.2018
(73) Proprietor: Xue, Hong, Shenzhen City, Jiangsu 518131 (CN); Li, Juan, Shiliu Town, Donghai County Jiangsu 222314 (CN)
(72) Inventor: Xue, Hong, Shenzhen City, Jiangsu 518131 (CN); Li, Juan, Shiliu Town, Donghai County Jiangsu 222314 (CN)
(74) Representative: Anohins, Vladimirs

(56) References cited:
- EP-A2- 1 425 211
- WO-A1-2016/128789
- WO-A1-2017/032832
- CN-A- 102 837 777
- CN-U- 202 429 321
- CN-U- 202 737 011
- CN-U- 203 381 746
- KR-A- 20150 006 665
- US-A1- 2016 257 369
- US-A1- 2016 303 961

## Description

### FIELD OF THE INVENTION

The present invention relates to technical fields of electrically-assisted vehicle and electrically-assisted vehicle modified from bicycle.

### BACKGROUNG OF THE INVENTION

Comparing with bicycles, current electrically-assisted vehicles are all bigger, heavier, and complicated in structure. For example, controller in electrically-assisted vehicle needs to add additional installation space and structure outside the frame, which increases weight of the whole vehicle and difficulty on design that makes it un-concise. Likewise, if other functional related circuits are added, additional installation space and structure also need to be added outside the frame, which also increase weight of the whole vehicle and difficulty on design that makes it un-concise; without adding these in, it would not well meet increasing functional needs by the users.

Accordingly, current electrically-assisted vehicles have batteries than bicycle, which are also external, where the batteries need separated installation space and structure outside the frame that increases weight of the whole vehicle and difficulty on design making it look un-concise.

For example, an electrically-assisted vehicle is disclosed in a patent application CN 102 837 777 A (SU YIQING) 26 December 2012, which is considered as the closest prior art. The vehicle is having a frame that comprises a down tube and middle tube connected with each other wherein a controller is disposed in the middle tube and a battery is disposed in the down tube. However, this design does not provide for additional functional circuits and for concise appearance of the vehicle.

### SUMMARY OF THE INVENTION

Technical problem solved by the present invention is: how to make appearance of electrically-assisted vehicle more concise and lighter in its weight while still keeping controller, battery (or batteries), and new added relative functional circuits.

For achieving above object of the invention, the invention uses technical solution: providing a frame for electrically-assisted vehicle, which comprises down tube and middle tube connected with each other, wherein a controller is disposed in the middle tube; wherein, inside the down tube, it is provided with relative circuits, the relative circuits comprise charging circuit, and charging socket, the charging circuit and charging socket are disposed in a charging box base, the charging box base is disposed in the down tube, the charging box base is hinged with a charging box lid via hinge pin(s); wherein the relative circuits also comprise USB socket and relative circuit thereof, the USB socket and relative circuit thereof are disposed in the charging box base; wherein the relative circuits also comprise battery, where the battery is disposed in the down tube; wherein the battery is provided with DC (direct current) charging plug, the DC charging plug is electrically connected with the charging circuit; and wherein an end of the battery is provided with DC charging plug, the DC charging plug is electrically connected with the charging circuit; the battery is provided with USB buck board, the USB buck board is also provided with USB plug, the USB plug is electrically connected with USB socket and relative circuit thereof.

The battery comprises battery casing and battery core contained therein, the battery core is ten series and two parallels core, a battery protection board is also connected on the battery core.

The battery protection board has B+, P+, C+, B-, P-, and C- ends thereon, wherein the B+ end connects with anode of the battery core, and the B- end connects with cathode of the battery core; the P+ end connects with anode of a discharging load, and P- end connects with cathode of the discharging load; anode of discharging output plug cable connects with the P+ end, and cathode of the discharging output plug cable connects with the P- end; the C+ end connects with anode of the DC charging plug, the C- end connects with cathode of the DC charging plug; and the discharging output plug cable is disposed on an end of the battery casing.

The relative circuits also have discharging switch, the discharging switch is disposed in the charging box base; the discharging switch connects with discharging switch interface in the battery; the discharging switch interface is connected on the battery protection board.

An end of the battery casing is provided with speedometer cable, an end of the speedometer cable is connected on the battery protection board.

The relative circuits also comprise Bluetooth functional circuit, where the Bluetooth functional circuit is disposed in the charging box base.

The relative circuits also comprise alarming circuit, where the alarming circuit is disposed in the charging box base.

The relative circuits also comprise GPS circuit, where the GPS circuit is disposed in the charging box base.

The relative circuits also comprise APP functional circuit, where the APP functional circuit is disposed in the charging box base.

The relative circuits also comprise power switch for controlling on-off of electrically-assisted vehicle.

Moreover, an electrically-assisted vehicle is also provided in the present invention, which comprises a frame of any technical solutions, as described above.

Beneficial effects of the invention are: the invention changes structure of conventional electrically-assisted vehicle, to skillfully apply controller and battery into middle tube and down tube of the frame, respectively; where charging box has functions, such as, USB, charging, Bluetooth, alarming, GPS, APP, and etc., which makes the whole vehicle more concise; it combines with the frame as a whole, which not only reduces weight of the body, but also adds more functions that increases performance of the whole vehicle. In addition, the battery has novel structure, light weight, and small volume, which are suitable for arranging inside tubular structure of the frame, and also have high capacities to satisfy daily requirement of travelling with power assistance.

### BRIEF DESCRIPTION OF THE DRAWINGS

Fig. 1 is structure diagram of the present invention;
Fig. 2 is partial enlarged view of Fig. 1;
Fig. 3 is A-A sectional view of Fig. 1;
Fig.4 (including Fig. 4a and Fig. 4b) shows structure diagram of a battery of the present invention, wherein Fig. 4a is front view of the battery, and Fig. 4b is left view of the battery;
Fig. 5 shows partial detailed view of Fig. 4a;
Fig. 6 shows structure diagram of a battery core.

Wherein, reference signs are: down tube 1, charging box base 4, hinge pin 5, charging box lid 6, charging socket 7, power switch 8, USB socket 9, controller 10, middle tube 11, discharging switch 13, and
Battery 2, speedometer cable 21, battery casing 22, battery handle 23, DC charging plug 24, discharging switch interface 25, USB plug 26, battery protection board 27, battery core 28, and discharging output plug cable 29.

### DETAILED DESCRIPTION OF THE INVENTION

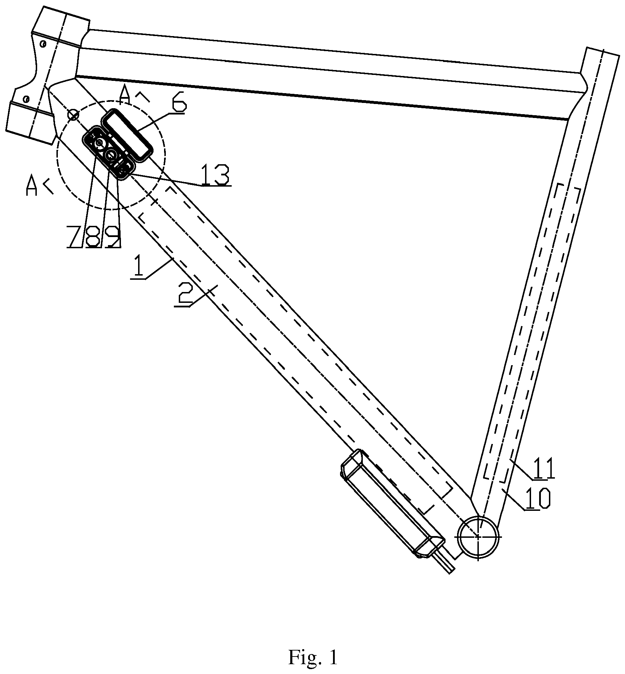

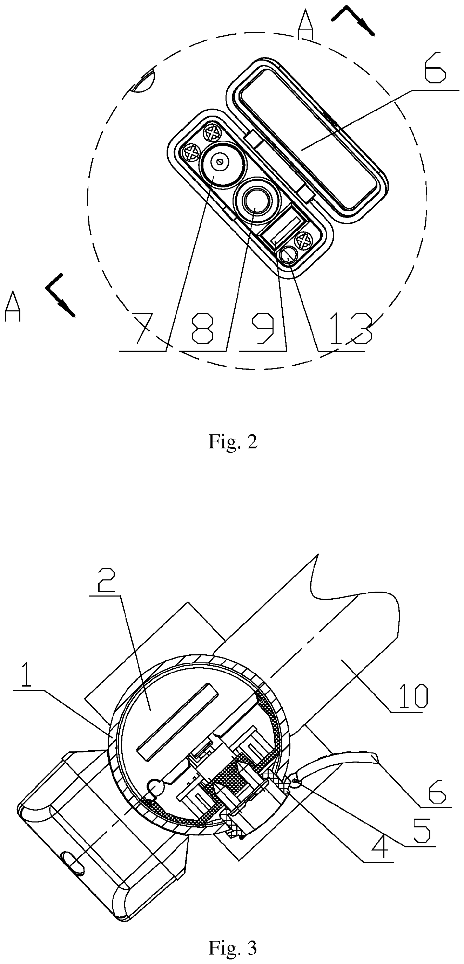

As showed in Figs. 1-3, the frame of electrically-assisted vehicle comprises down tube 1 and middle tube 11 connected with each other. Controller 10 of electrically-assisted vehicle is disposed in the middle tube 11.

Inside the down tube 1, relative circuits are disposed, the relative circuits comprise: charging circuit, and charging socket 7; the charging circuit and charging socket 7 are disposed in charging box base 4, the charging box base 4 is disposed in the down tube 1, the charging box base 4 is hinged with charging box lid 6 via hinge pin(s) 5.

Controller 10 is disposed in the middle tube 11 as compared with that before modification.

The relative circuits also comprise USB socket 9 and relative circuit thereof (e.g., USB socket circuit), where USB socket 9 and relative circuit thereof are disposed in the charging box base 4.

Further, the relative circuits also have Bluetooth functional circuit, where the Bluetooth functional circuit is disposed in charging box base 4.

Further, the relative circuits also have alarming circuit, where the alarming circuit is disposed in the charging box base 4, and connect with execution element (e.g., buzzer) when applying the frame to electrically-assisted vehicle. Alarm signal cable of the controller 10 connects with the alarming circuit.

Further, the relative circuits also have GPS circuit, where the GPS circuit is disposed in charging box base 4.

Further, the relative circuits also have APP circuit, where the APP circuit is disposed in charging box base 4.

The relative circuits also have discharging switch 13, where the discharging switch 13 is disposed in charging box base 4. The discharging switch 13 connects with discharging switch interface 25 in the battery 2, while the user controls output voltage by operating the discharging switch 13, to achieve gears control.

The relative circuits also comprise power switch 13 for turning on or off the switch of electrically-assisted vehicle.

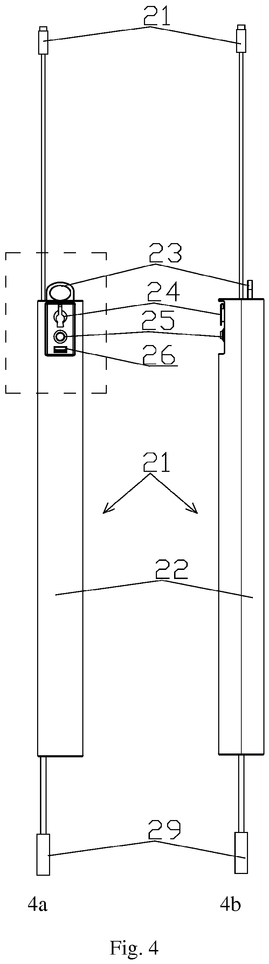

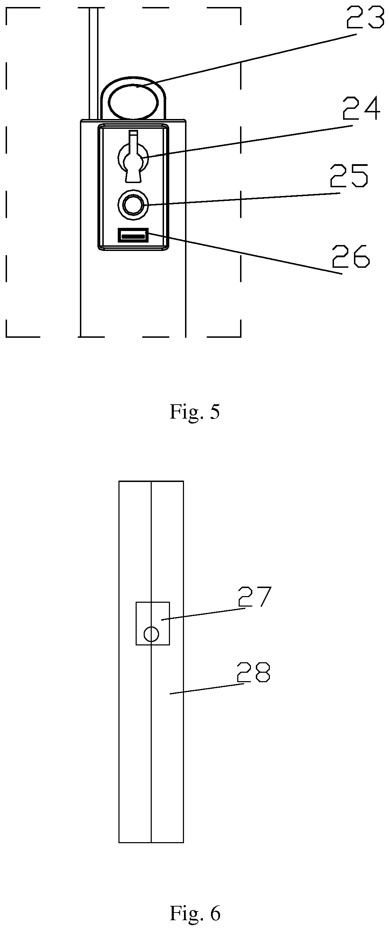

As shown in Figs. 4-6, the frame of electrically-assisted vehicle may also dispose battery 2 therein. The battery 2 is included in the relative circuit, the battery 2 is fixed in the down tube 1.

The battery 2 comprises battery casing 22 and battery core 28 contained therein, the battery core 28 is ten series and two parallels core, namely, the battery core 28 is in series connected by ten series of core combinations, while the core combination is parallel connected by two cores. The core can use Li-ion cell (core). For ensuring safety of the battery and reducing heat productivity of the battery, the battery core therefore also connects with battery protection board 27.

Further, as shown in Figs. 4-5, one end of the battery casing 22 is provided with DC charging plug 24, discharging switch interface 25, USB buck board and speedometer cable 21, the other end of the battery casing 22 is provided with discharging output plug cable 29. Specifically, the USB buck board is also provided with USB plug 26.

Specifically, the battery protection board 27 has B+, P+, C+, B-, P-, and C- ends thereon.

Wherein, the B+ end connects with anode of the battery core 28, and the B- end connects with cathode of the battery core 28. The P+ end connects with anode of the discharging output plug cable 29, and P- end connects with cathode of the discharging output plug cable 29. Plug of the discharging output plug cable 29 connects with external discharging load, such as, power anode and cathode of the controller 10, LED light, and etc.. C+ end connects with one end of anode of DC charging plug 24, C- end connects with one end of cathode of DC charging plug 24, the other ends of anode and cathode of DC charging plug 24 electrically connect with charging socket 7, charging socket 7 connects with external charger.

Further, the discharging switch interface 25 is connected on the battery protection board 27, to control output voltage by connecting or disconnecting MOS. The discharging switch interface 25 connects with the discharging switch 13, the user controls output voltage by operating the discharging switch 13, to achieve gears control.

Further, one end of the USB buck board connects P+ and P- ends of the battery protection board, and the other end connects the USB plug 26, to achieve charging of external intelligent terminals by USB plug 26. More specifically, the USB buck board reduces original output voltage and output current to 5V/1A so that output voltage and output current of the USB plug 26 are 5V/1A. The USB socket 9 and the USB plug 26 are electrically connected, where the USB plug 26 provides power. Meanwhile, the USB plug 26 also provides power to functional circuits in relative circuits.

Further, an end of the battery casing 22 adjacent to the DC charging plug 24 is provided with a battery handle 23.

Further, one end of the battery casing 22 is provided with speedometer cable 21, one end of the speedometer cable 21 connects on the battery protection board 27, and the other end connects speedometer.

Built-in type battery 2 is installed in down tube 1 through opening of the down tube 1, the charging box base 4 is fixed to down tube 1 by locking screw; opening the charging box lid 6, pressing the power switch 8, and inserting power charger into charging socket 7, to charge by the battery 2. Meanwhile, it can directly connect with DCE (Data Communications Equipment) such as cell phones for charging via the USB socket 9, and, cell phones can intelligently control the electrically-assisted vehicle and realtimely check status of the electrically-assisted vehicle via the APP functional circuit. While opening the power switch 8, circuits of the whole vehicle normally operate, and the controller 10 provides power that the whole vehicle electrical system normally works.

Referring to Fig. 1, the invention also discloses an electrically-assisted vehicle, the electrically-assisted vehicle utilizes frame for electrically-assisted vehicle provided by above mentioned technical solutions.

The inventive point of the invention is: changing structure of conventional electrically-assisted vehicle, to skillfully apply controller into middle tube of the frame; where charging box has functional circuits of USB, charging, Bluetooth, alarming, GPS, and APP, which makes the whole vehicle more concise; it combines the frame as a whole, which not only reduces weight of the body, but also adds more functions that increases performance of the whole vehicle.

Moreover, functional circuits, such as, USB socket and relative circuit thereof, Bluetooth functional circuit, alarming circuit, GPS circuit, APP functional circuit, and discharging switch, and controller all are relative technique and products those skilled in the art can clearly and conveniently obtained based on the prior art. For example, APP circuit can use Soc, where Soc can also connect with Bluetooth functional circuit, alarming circuit, and GPS circuit; Bluetooth functional circuit has CSR 86xx, GPS circuit has NEO-6M UBLOX. Alarming circuit can use whole-vehicle alarming circuit including vibration anti-theft sensor, battery power sensor, and battery temperature sensor. The controller also has many available products that meet requirement of the invention. In the invention, other included solutions are not repeated here, since the inventive points are not involved and the consideration is made without affecting the protection range.

## Claims

1. A frame for an electrically-assisted vehicle, comprising a down tube (1) and a middle tube (11) connected with each other, wherein a controller (10) is disposed in the middle tube (11), **characterized in that**, inside the down tube (1), the frame is provided with relative circuits; the relative circuits comprising a charging circuit and charging socket (7), the charging circuit and charging socket (7) are disposed in a charging box base (4), the charging box base (4) is disposed in the down tube (1), the charging box base (4) is hinged with a charging box lid (6) via one or more hinge pins (5); the relative circuits also comprising a USB socket (9) and relative circuit thereof, the USB socket (9) and relative circuit thereof are disposed in the charging box base (4); the relative circuits also comprise a battery (2), the battery (2) is disposed in the down tube (1), and an end of the battery (2) is provided with a DC charging plug (24), the DC charging plug (24) is electrically connected with the charging circuit; the battery (2) is provided with a USB buck board, the USB buck board is also provided with a USB plug (26), the USB plug (26) is electrically connected with the USB socket (9) and relative circuit thereof.

2. The frame according to claim 1, **characterized in that** the relative circuits also comprise a Bluetooth functional circuit, the Bluetooth functional circuit is disposed in the charging box base (4).

3. The frame according to claim 1, **characterized in that** the relative circuits also comprise an alarming circuit, the alarming circuit is disposed in the charging box base (4).

4. The frame according to claim 1, **characterized in that** the relative circuits also comprise a GPS circuit, the GPS circuit is disposed in the charging box base (4).

5. The frame according to claim 1, **characterized in that** the relative circuits also comprise an APP functional circuit, the APP functional circuit is disposed in the charging box base (4).

6. The frame according to claim 1, **characterized in that** the relative circuits also comprise a power switch (8) for controlling on-off of the electrically-assisted vehicle.

7. The frame according to claim 1, **characterized in that** the battery (2) comprises a battery casing (22) and a battery core (28) contained therein, the battery core (28) being a ten series and two parallels core, a battery protection board (27) is also connected on the battery core (28).

8. The frame according to claim 7, **characterized in that** the battery protection board (27) has B+, P+, C+, B-, P-, and C- ends thereon, wherein the B+ end connects with anode of the battery core (28), and the B- end connects with cathode of the battery core (28); the P+ end connects with anode of a discharging load, and P- end connects with cathode of the discharging load; anode of discharging output plug cable (29) connects with the P+ end, and cathode of the discharging output plug cable (29) connects with the P- end; the C+ end connects with anode of the DC charging plug (24), the C- end connects with cathode of the DC charging plug (24); and the discharging output plug cable (29) is disposed on an end of the battery casing (22).

9. The frame according to claim 7, **characterized in that** the relative circuits also have a discharging switch (13), the discharging switch (13) is disposed in the charging box base (4); the discharging switch (13) is connected with a discharging switch interface (25) in the battery (2); the discharging switch interface (25) is connected on the battery protection board (27).

10. The frame according to claim 7, **characterized in that** an end of the battery casing (22) is provided with a speedometer cable (21), an end of the speedometer cable (21) is connected on the battery protection board (27).

11. An electrically-assisted vehicle, **characterized in** comprising a frame according to any of claims 1-10.

## Patentansprüche

1. Rahmen für ein elektrisch unterstütztes Fahrzeug, der ein Unterrohr (1) und ein Stützrohr (11), die miteinander verbunden sind, umfasst, wobei eine Steuerung (10) in dem Stützrohr (11) angeordnet ist, **dadurch gekennzeichnet, dass** innerhalb des Unterrohrs (1) der Rahmen mit Bezugsschaltungen versehen ist; wobei die Bezugsschaltungen eine Ladeschaltung und eine Ladebuchse (7) umfassen, die Ladeschaltung und die Ladebuchse (7) sind in einer Ladeboxbasis (4) angeordnet, die Ladeboxbasis (4) ist in dem Unterrohr (1) angeordnet, die Ladeboxbasis (4) ist über einen oder mehrere Scharnierbolzen (5) gelenkig mit einem Ladeboxdeckel (6) verbunden; wobei die Bezugsschaltungen auch eine USB-Buchse (9) und eine Bezugsschaltung derselben umfassen, die USB-Buchse (9) und die Bezugsschaltung derselben sind in der Ladeboxbasis (4) angeordnet; die Bezugsschaltungen umfassen auch eine Batterie (2), die Batterie (2) ist in dem Unterrohr (1) angeordnet und ein Ende der Batterie (2) ist mit einem Gleichstrom-Ladestecker (24) versehen, der Gleichstrom-Ladestecker (24) ist elektrisch mit der Ladeschaltung verbunden; die Batterie (2) ist mit einer USB-Buck-Platine versehen, die USB-Buck-Platine ist auch mit einem USB-Stecker (26) versehen, der USB-Stecker (26) ist elektrisch mit der USB-Buchse (9) und der Bezugsschaltung derselben verbunden.

2. Rahmen nach Anspruch 1, **dadurch gekennzeichnet, dass** die Bezugsschaltungen auch einen Bluetooth-Funktionsschaltung umfassen, die Bluetooth-Funktionsschaltung ist in der Ladeboxbasis (4) angeordnet.

3. Rahmen nach Anspruch 1, **dadurch gekennzeichnet, dass** die Bezugsschaltungen auch eine Alarmschaltung umfassen, die Alarmschaltung ist in der Ladeboxbasis (4) angeordnet.

4. Rahmen nach Anspruch 1, **dadurch gekennzeichnet, dass** die Bezugsschaltungen auch eine GPS-Schaltung umfassen, die GPS-Schaltung ist in der Ladeboxbasis (4) angeordnet.

5. Rahmen nach Anspruch 1, **dadurch gekennzeichnet, dass** die Bezugsschaltungen auch eine App-Funktionsschaltung umfassen, die App-Funktionsschaltung ist in der Ladeboxbasis (4) angeordnet.

6. Rahmen nach Anspruch 1, **dadurch gekennzeichnet, dass** die Bezugsschaltungen auch einen Leistungsschalter (8) zum Steuern einer Ein-Aus-Schaltung des elektrisch unterstützten Fahrzeugs umfassen.

7. Rahmen nach Anspruch 1, **dadurch gekennzeichnet, dass** die Batterie (2) ein Batteriegehäuse (22) und einen darin enthaltenen Batteriekern (28) umfasst, wobei der Batteriekern (28) ein Zehn-Reihen-und-zwei-Parallelen-Kern ist, eine Batterieschutzplatine (27) ist ebenfalls auf dem Batteriekern (28) angeschlossen.

8. Rahmen nach Anspruch 7, **dadurch gekennzeichnet, dass** die Batterieschutzplatine (27) B+-, P+-, C+-, B--, P-- und C--Enden auf derselben aufweist, wobei das B+-Ende mit einer Anode des Batteriekerns (28) verbunden ist und das B--Ende mit einer Kathode des Batteriekerns (28) verbunden ist; das P+-Ende mit einer Anode einer Entladungslast verbunden ist und das P--Ende mit einer Kathode der Entladungslast verbunden ist; eine Anode eines Entladungsausgang-Steckerkabels (29) mit dem P+-Ende verbunden ist und eine Kathode des Entladungsausgang-Steckerkabels (29) mit dem P--Ende verbunden ist; das C+-Ende mit einer Anode des Gleichstrom-Ladesteckers (24) verbunden ist, das C-Ende mit einer Kathode des Gleichstrom-Ladesteckers (24) verbunden ist; und das Entladungsausgang-Steckerkabel (29) auf einem Ende des Batteriegehäuses (22) angeordnet ist.

9. Rahmen nach Anspruch 7, **dadurch gekennzeichnet, dass** die Bezugsschaltungen auch einen Entladeschalter (13) aufweisen, der Entladeschalter (13) ist in der Ladeboxbasis (4) angeordnet; der Entladeschalter (13) ist mit einer Entladeschalter-Schnittstelle (25) in der Batterie (2) verbunden; die Entladeschalter-Schnittstelle (25) ist auf der Batterieschutzplatine (27) angeschlossen.

10. Rahmen nach Anspruch 7, **dadurch gekennzeichnet, dass** ein Ende des Batteriegehäuses (22) mit einer Tachometerwelle (21) versehen ist, ein Ende der Tachometerwelle (21) auf der Batterieschutzplatine (27) angeschlossen ist.

11. Elektrisch unterstütztes Fahrzeug, **dadurch gekennzeichnet, dass** es einen Rahmen nach einem der Ansprüche 1 bis 10 umfasst.

## Revendications

1. Châssis pour un véhicule à assistance électrique, comprenant un tube diagonal (1) et un tube intermédiaire (11) reliés l'un à l'autre, dans lequel une unité de commande (10) est disposée dans le tube intermédiaire (11), **caractérisé en ce que**, à l'intérieur du tube diagonal (1), le châssis est muni de circuits relatifs ; les circuits relatifs comprenant un circuit de charge et un connecteur de charge (7), le circuit de charge et le connecteur de charge (7) sont disposés dans une base de boîte de charge (4), la base de boîte de charge (4) est disposée dans le tube diagonal (1), la base de boîte de charge (4) est articulée avec un couvercle de boîte de charge (6) via un ou plusieurs ergots d'articulation (5) ; les circuits relatifs comprenant également un connecteur USB (9) et un circuit relatif de ce dernier, le connecteur USB (9) et son circuit relatif sont disposés dans la base de boîte de charge (4) ; les circuits relatifs comprennent également une batterie (2), la batterie (2) est disposée dans le tube diagonal (1), et une extrémité de la batterie (2) est munie d'une prise de charge en CC (24), la prise de charge en CC (24) est électriquement reliée au circuit de charge ; la batterie (2) est munie d'une carte mâle USB, la carte mâle USB est également munie d'une prise USB (26), la prise USB (26) est électriquement reliée au connecteur USB (9) et son circuit relatif.

2. Châssis selon la revendication 1, **caractérisé en ce que**
les circuits relatifs comprennent également un circuit fonctionnel Bluetooth, le circuit fonctionnel Bluetooth est disposé dans la base de boîte de charge (4).

3. Châssis selon la revendication 1, **caractérisé en ce que**
les circuits relatifs comprennent également un circuit d'alarme, le circuit d'alarme est disposé dans la base de boîte de charge (4).

4. Châssis selon la revendication 1, **caractérisé en ce que**
les circuits relatifs comprennent également un circuit GPS, le circuit GPS est disposé dans la base de boîte de charge (4).

5. Châssis selon la revendication 1, **caractérisé en ce que**
les circuits relatifs comprennent également un circuit fonctionnel APP, le circuit fonctionnel APP est disposé dans la base de boîte de charge (4).

6. Châssis selon la revendication 1, **caractérisé en ce que**
les circuits relatifs comprennent également un interrupteur (8) pour la commande marche-arrêt du véhicule à assistance électrique.

7. Châssis selon la revendication 1, **caractérisé en ce que**
la batterie (2) comprend un carter de batterie (22) et un noyau de batterie (28) contenu en son sein, le noyau de batterie (28) étant un noyau de dix en série et deux en parallèle, une carte de protection de batterie (27) est également reliée au noyau de batterie (28).

8. Châssis selon la revendication 7, **caractérisé en ce que**
la carte de protection de batterie (27) a des extrémités B+, P+, C+, B-, P- et C- sur cette dernière, dans lesquelles l'extrémité B+ est reliée à l'anode du noyau de batterie (28), et l'extrémité B- est reliée à la cathode du noyau de batterie (28) ; l'extrémité P+ est reliée à l'anode d'une charge se déchargeant, et une extrémité P- est reliée à la cathode de la charge se déchargeant; l'anode de câble de prise de sortie de décharge (29) est reliée à l'extrémité P+, et la cathode du câble de prise de sortie de décharge (29) est reliée à l'extrémité P- ; l'extrémité C+ est reliée à l'anode de la prise de charge en CC (24), l'extrémité C- est reliée à la cathode de la prise de charge en CC (24) ; et le câble de prise de sortie de décharge (29) est disposé sur une extrémité du carter de batterie (22).

9. Châssis selon la revendication 7, **caractérisé en ce que**
les circuits relatifs ont également un commutateur de décharge (13), le commutateur de décharge (13) est disposé dans la base de boîte de charge (4) ; le commutateur de décharge (13) est relié à une interface de commutateur de décharge (25) dans la batterie (2) ; l'interface de commutateur de décharge (25) est reliée à la carte de protection de batterie (27).

10. Châssis selon la revendication 7, **caractérisé en ce que**
une extrémité du carter de batterie (22) est munie d'un câble de tachymètre (21), une extrémité du câble de tachymètre (21) est reliée à la carte de protection de batterie (27).

11. Véhicule à assistance électrique, caractérisé comme comprenant un châssis selon l'une quelconque des revendications 1 à 10.
